# EUROPEAN PATENT APPLICATION

(11) **EP 1 079 643 A1**
(43) Date of publication of application: **28.02.2001**
(21) Application number: 99306647.1
(22) Date of filing: 23.08.1999
(51) Int. Cl.: H04Q 7/22, H04L 12/56, H04L 29/06

(54) **Improved GTP header**

(71) Applicant: LUCENT TECHNOLOGIES INC., Murray Hill, New Jersey 07974-0636 (US)
(72) Inventor: Casati, Alessio, Wootton Bassett, Wiltshire SN4 7SH (GB)
(74) Representative: Williams, David John

(57) **Abstract**

There is disclosed a GPRS tunnelling protocol header having an optional sequence number field, and including a sequence field to indicate whether the sequence number field is present in the header. A UMTS GPRS tunnelling protocol header comprises, in sequence: a version field; a payload type field; a sequence filed; a message type filed; a length field; a flow label field; and an optional sequence number field, wherein the sequence field indicates whether the optional sequence number field is present in the header.

## Description

### Field of the Invention

The present invention relates to the GPRS tunnelling protocol (GTP) header used for transporting packets between different network elements in mobile telecommunications systems. The invention is particularly, but not exclusively, concerned with the utilisation of GTP in UMTS (Universal Mobile Telecommunications System).

### Background to the Invention

In European mobile telecommunication systems such as the Global System for Mobile Communications (GSM), a system to provide packet services (for example for internet access) has been developed which is known as the General Packet Radio Service (GPRS). The GPRS system relies on the use of so-called tunnels in order to transport packets to/from packet networks from/to a current location of a mobile terminal.

A tunnel is the use of a packet protocol to transport another (or possibly the same) packet protocol from one point to another point of a network. This is achieved by encapsulating the packet to be transported into a new packet. The new packet has a header conforming to the new protocol and a payload, the payload comprising the original packet including the original packet header and payload. In order to implement tunnelling it is sometimes necessary to insert a further header between the header of the packet used to transport the other packets and the transported packet's header. That is, a header that is located between the header of the transporting packet and the header of the transported packet.

This additional header is used to recognise, for instance, flows of packets that are logically correlated, and/or to add a sequence number so that the transmission order of the original packets is not lost.

The additional header is known as the tunnelling protocol header, in a GPRS environment is more specifically known as GPRS tunnelling protocol (GTP) header.

There is a currently a proposal for the implementation of a GTP header. This proposal has some aspects that make it complex, and some of the information it contains is effectively redundant.

It is therefore an object of the present invention to provide an improved GPRS tunnelling protocol (GTP) header.

### Summary of the Invention

According to the present invention there is provided a GPRS tunnelling protocol header having an optional sequence number field, and including a sequence field to indicate whether the sequence number field is present in the header.

The invention improves the format of the GTP header such that the transport overhead is lowered and implementation becomes simpler. It is also beneficial towards the transport of small packets, such as those generated by media(voice) coders.

The invention is applicable in both the access network and the backbone network, wherever GTP is used in a wireless system.

The size of the sequence field may be two octets. With the sequence bit set the header size may be ten octets. With the sequence bit not set the header size may be eight octets.

The protocol header may further include a flow label field. The size of the flow label field may be four octets.

The protocol header may be for use in a UMTS system, and the protocol header may not include a logical link controller field. The protocol header may also not include a logical link controller frame number (LFN) field.

The protocol header may not include a tunnel identifier (TID) field.

The protocol header may further include a payload type field. There may be no spare octets.

According to the present invention there is also provided a UMTS GPRS tunnelling protocol header comprising, in sequence: a version field; a payload type field; a sequence filed; a message type filed; a length field; a flow label field; and an optional sequence number field, wherein the sequence field indicates whether the optional sequence number field is present in the header.

The version field may be 3 bits, the payload type filed may be 1 bit, the sequence field may be 1 bit; the message type field may be one octet, the length field may he two octets; the flow label field may be 4 octets; and the optional sequence number field may be 2 octets.

The UMTS GPRS tunnelling protocol may further comprise a set of 4 spare bits in the first octet of the header.

The invention will now be described by way of example with reference to the following drawings in which:

### Brief Description of the Drawings

Figure 1 illustrates an overview of a GPRS network architecture;
Figure 2 illustrates a packet including a GPRS tunnelling protocol header;
Figure 3 illustrates a known proposed GPRS tunnelling protocol header; and
Figure 4 illustrates an improved GPRS tunnelling protocol header according to the present invention.

### Description of Preferred Embodiment

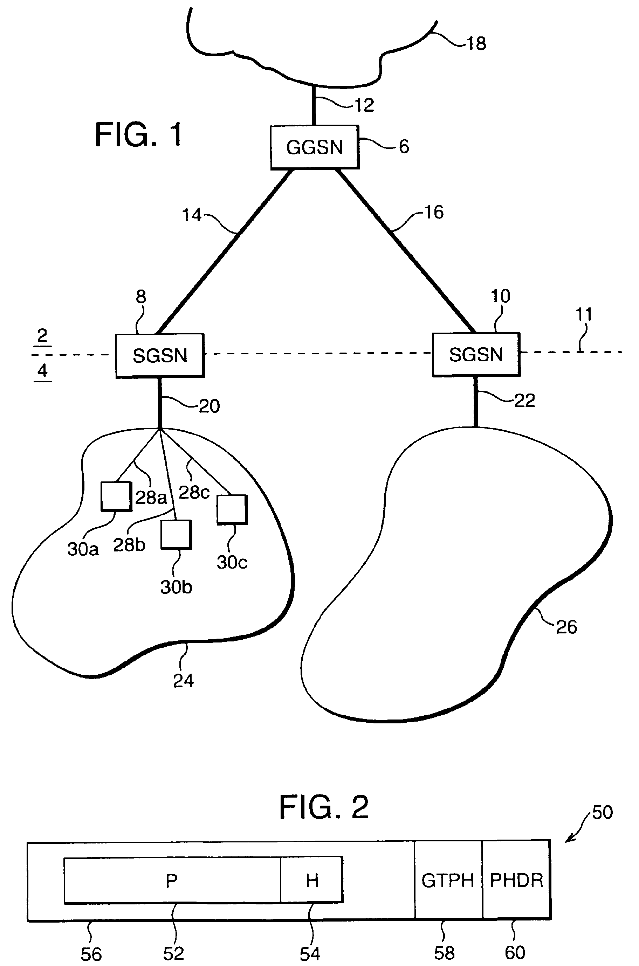

Referring to Figure 1, there is illustrated an overview of a GPRS network architecture in which the GPRS tunnelling protocol (GTP) may be utilised. The invention may be utilised in any environment where the GTP is conventionally used, and is not limited to the specific environment of Figure 1, which is used herein for the purposes of illustrating the invention.

Referring to Figure 1, the GPRS network architecture includes a gateway GPRS support node (GGSN) 6 and two serving GPRS support nodes (SGSNs) 8 and 10.

Each SGSN 8 and 10 is connected to a respective location area 24 and 26 via respective interfaces 20 and 22. The location area 24 includes base station sub-systems (BSSs) 30a, 30b, 30c connecting to the interface 20 via connections 28a, 28b, 28c. Each BSS supports a plurality of cells within the location area. The location area 26 will be similarly constructed to the location area 24, but is not shown in Figure 1.

The GGSN 6 connects via interfaces 14 and 16 to each of the SGSNs 8 and 10, and may also connect to further SGSNs. The GGSN 6 connects the SGSNs 8 and 10 via an interface 12 to a wider network 18.

The dashed line 11 that passes through the SGSNs 8 and 10 indicates the boundary between the backbone network and the access network. The backbone network is that portion of the network architecture of Figure 1 above the dashed line 11, and the access network is that portion of the network architecture of Figure 1 below the dashed line. The backbone network may be a public land mobile network.

In a GPRS network such as that illustrated in Figure 1, tunnelling of packets occurs on the interfaces 14 and 16 between the GGSN 6 and the SGSNs 8 and 10. GTP is the GPRS tunnelling protocol. It is specified in TS GSM09.60. The GPRS tunnelling protocol is transported on top of a UDP (User Datagram Protocol) or TCP (Transmission Control Protocol) transport layer, which in turn are transported on the IP (Internet Protocol) Network Layer. The transportation of the GTP is outside the scope of the present invention, and its implementation will be familiar to one skilled in the art. Although in GSM/GPRS tunnelling is utilised between the GGSN and the SGSNs, in UMTS tunnelling is also used in the access network on the interfaces 20 and 22.

The present invention may be utilised in either the access network or the backbone network, wherever the GPRS tunnelling protocol is implemented in a wireless system.

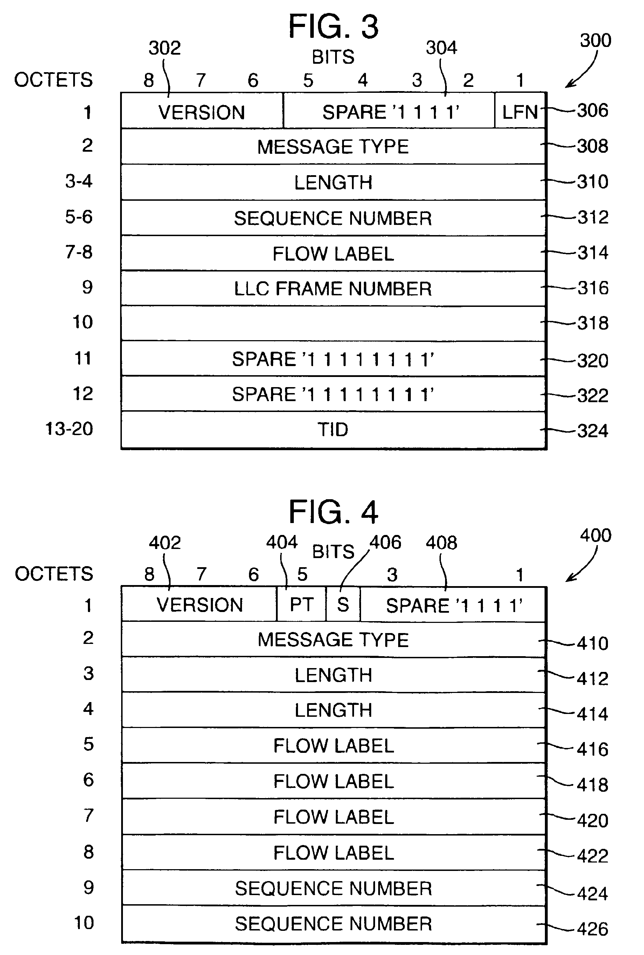

The principle of tunnelling, which will be familiar to one skilled in the art, is illustrated by Figure 2. An encapsulated packet 50 for tunnelling is shown in Figure 2. The encapsulated packet 50 includes an encapsulation header 60 labelled PHDR, a GPRS tunnelling protocol header 58 labelled GTPH, and an encapsulated packet payload 56. The encapsulated packet payload 56 includes the original unencapsulated packet including the original packet header 54 and the original packet payload 52.The specific GTP header as proposed in TS GSM09.60 is illustrated in Figure 3. The GTP header 300 of Figure 3 includes a version field 302, a field of 4 spare bits 304, a LFN logical link controller frame number 306, a message type field 308, a length field 310, a sequence number field 312, a flow label field 314, a LLC frame number field 316, a field 318 of an octet which may be used as an extension of the LLC frame number field, two spare fields 320 and 322 of an octet each, and a tunnel identifier Field (TID) 324.

The 3 bit version field 302 is used to identify the version of the GTP header. The 1 bit LFN field 306 indicates whether the LLC frame number field is used in the header, i.e. whether it is present in the header. The message type field 308 comprising an octet defines which type of packet is being transported: it can be a user packet (and the GTP is used to tunnel it between GTP endpoints), or it can be different types of control information used to manage the tunnel. The length field 310 comprising two octets indicates the size in bytes of the packet being transported. The sequence number field 312 comprising two octets is used to guarantee in-sequence delivery of messages. In signalling messages this field is used as a transaction identifier. The flow label field 314 comprising two octets is used to indicate to the receiving end packets that belong to the same GTP flow.

In the current standards proposals, the flow label field is used as the discriminator of a packet pipe logically distinct from other packet pipes with a different flow identifier. This would result in the possibility to use the flow label field as an identifier of a flow of packets to be treated in the same way in terms of queuing and scheduling. The LLC Frame number field 316 comprising an octet is not to be used in UMTS, since LLC (Logical Link Controller) is part of the UTRAN (UMTS Terrestrial Access Network). The tunnel identifier field 324 comprising 8 octets uniquely identifies a MM (mobility management) and a PDP (Packet Data Protocol) context via an IMSI (International Mobile Subscriber Identifier) and an NSAPI (Network Service Access Point).

The use of the current version of the GTP header as shown in Figure 3 unnecessarily wastes resources in the backbone network and UMTS Iu interface transport links. In addition, the GTP header of Figure 3 complicates the implementation, and the computation required to provide the implementation is unnecessarily complex.

According to the present invention, there is provided an improved GPRS tunnel protocol (GTP) header, which may be utilised for UMTS, or any system that could utilise tunnelling.

The preferred implementation of the improved GTP header according to the present invention is shown in Figure 4. The improved GTP header 400 includes a 3 bit version field 402, a 1 bit payload type (PT) field 404, a 1 bit sequence field (S) 406, a set of 4 spare bits 408, a message type field 410 of one octet, two length type fields 412 and 414 of one octet each, four flow labels fields 416 to 422 of one octet each, and two sequence number fields 424 and 426 of one octet each.

The key improvement of the GTP header of Figure 4 over that of Figure 3 according to the present invention is the introduction of the sequence field 406. The sequence field is used to indicate whether the sequence number is present in the header. If the sequence field indicates that the sequence number is present, then the processing circuitry knows to look for the sequence number. If the sequence field indicates that the sequence filed is not present, the processing circuitry knows it does not have to look for the sequence number. Thus the sequence field, where appropriate, can be eliminated from then GTP header.

A comparison between the GTP header of the present invention as illustrated in Figure 4, and the current proposed GTP header of Figure 3, can be summarised as follows.

The LLC frame number field 316 and the LFN field 306 the GTP header of Figure 3 are not used in the GTP header of Figure 4. The size of the flow label field is increased in the preferable implementation of the header in Figure 4, so that there are no problems in handling many users in large networks. The spare fields 320 and 322 are also dropped. Further, the TID field 324 is also dropped.

Dropping the TID field 324 is good for security reasons. The TID field is also redundant if the end points agree on a value of the flow label to be used.

The payload type field 404 according to a change request (CR) that has already been approved is added to the GTP header 400. As discussed hereinabove, in accordance with the invention the sequence field 406 is also newly added. A detailed description of each field of the new GTP header of Figure 4 is given hereinafter.

The version field 402 indicates the GTP version used, as in the GTP header of Figure 3. The PT field 404 is used to discriminate the GTP protocol used to carry user traffic from the GTP protocol used to carry charging information. The message type field 410 and the length fields 412 to 414 correspond to the equivalent fields in Figure 3.The sequence field 406, as discussed hereinabove, indicates whether a sequence number is included in the GTP header. The sequence field, in the preferable example of Figure 4, comprises one bit. The bit of the sequence field is set to 1 if the sequence number field is used, and to 0 if the sequence number field is not used. When no sequence number is needed, the sequence number field is not present, and the overall GTP header size will be reduced.

In the preferable implementation of Figure 4, when the sequence number fields 424 and 426 are present, the GTP header comprises 10 octets. When the sequence number is not used the sequence number fields can be omitted and the GTP header size reduces to 8 octets. The GTP header size of 8 octets is a power of 2, which is better for fast hardware and software implementations. This results in less overhead when internet protocol and real time data are transported.

The removal of the sequence number fields is only made possible by the provision of the sequence field 406. If no sequence field was provided, the sequence number filed would have to carry blank values in the place of the sequence number, because the processing circuitry would automatically read the sequence number fields. The sequence filed 406 tells the processing circuitry whether to look for the sequence number.

In alternative embodiments, the sequence number field 406 may comprise a larger number of bits and may give an indication of the size of the sequence number field.

With the improved GTP header of Figure 4 there is achieved a more efficient transport of user traffic, and a simpler implementation (which is also faster in both software and hardware processing). In addition, use is made of only those fields which are needed, by the use of the sequence field that indicates the presence of the optional sequence number field. This results in less overhead when internet protocol and real time traffic is transported. This invention thus introduces concepts so far not used in GPRS (General Packet Radio Service).

Also, in the preferable implementation the size of almost all fields is 8bits, 16 bits or 32 bits and all the fields are not based on coding techniques requiring decoding before processing, such as BCD (Binary Coded Decimals).

The invention thus provides an improved GTP header by the use of a sequence field that indicates the presence of the sequence field, presence of which is therefore made optional. This allows a reduction of the overhead in particular for real time traffic, which never uses sequencing provided by GTP. Also, the length field is 16 bytes instead of 12 bytes, which is easier for implementers to handle.

Although the invention has been described herein with reference to a particular format of a GTP header as illustrated by Figure 4, it will be appreciated that variations in the structure of such a GTP header are possible without departing from the present invention.

## Claims

1. A GPRS tunnelling protocol header having an optional sequence number field, and including a sequence field to indicate whether the sequence number field is present in the header.

2. The protocol header of claim 1 wherein the size of the sequence number field is two octets.

3. The protocol header of claim 1 or claim 2 wherein with the sequence bit set the header size is ten octets.

4. The protocol header of claim 1 or claim 2 wherein with the sequence bit not set the header size is eight octets.

5. The protocol header of any one of claims 1 to 4 further including a flow label field.

6. The protocol header of claim 5 wherein the size of the flow label field is four octets.

7. The protocol header of any one of claims 1 to 6 for use in a UMTS system, wherein the protocol header does not include a logical link control field.

8. The protocol header of claim 7 wherein the protocol header does not include a logical link control frame number (LFN) field.

9. The protocol header of any one of claims 1 to 8 wherein the protocol header does not include a tunnel identifier (TID) field.

10. The protocol header of any one of claims 1 to 9 further including a payload type field.

11. The protocol header of any one of claims 1 to 10 wherein there are no spare octets.

12. A UMTS GPRS tunnelling protocol header comprising, in sequence: a version field; a payload type field; a sequence filed; a message type filed; a length field; a flow label field; and an optional sequence number field, wherein the sequence field indicates whether the optional sequence number field is present in the header.

13. The UMTS GPRS tunnelling protocol header of claim 12, wherein the version field is 3 bits, the payload type field is 1 bit, the sequence field is 1 bit; the message type field is one octet, the length field is two octets; the flow label field is 4 octets; and the optional sequence number filed is 2 octets.

14. The UMTS GPRS tunnelling protocol of claim 13, further comprising a set of 4 spare bits in the first octet of the header.
